# EUROPEAN PATENT APPLICATION

(11) **EP 4 226 750 A1**
(43) Date of publication of application: **16.08.2023**
(21) Application number: 22156029.5
(22) Date of filing: 10.02.2022
(51) Int. Cl.: A01B 39/18, A01B 69/04

(54) **A TOOL CARRIER UNIT AND AN AUTONOMOUS VEHICLE FOR PERFORMING AN AGRICULTURE TASK INCLUDING THE TOOL CARRIER UNIT**

(71) Applicant: EKOBOT AB, 721 32 Västerås (SE)
(72) Inventor: ETZNER, Lars, 633 69 Skogstorp (SE)
(74) Representative: Swea IP Law AB

(57) **Abstract**

The present invention relates to a tool carrier unit (1) for vehicles performing agriculture tasks. The tool carrier unit comprises a tool carrier (2) for carrying at least one tool for an agricultural purpose, and a height adjustment assembly (5) comprising at least one linear actuator (6, 6') coupled to the tool carrier such that the tool carrier can be raised and lowered. The height adjustment assembly (5) comprises a linear bearing (10) comprising a guide rail and a slide element movably engaged to each other so that the guide rail and the slide element are allowed to move relative to each other in a linear movement along the length of the guide rail. The tool carrier unit (1) comprises at least one mounting bracket (12, 12') comprising coupling means (16) for mechanically coupling the tool carrier unit to the vehicle. The linear bearing (10) is arranged between the mounting bracket (12, 12') and the tool carrier (2) such that the tool carrier and the mounting bracket are movable relative each other, wherein the at least one linear actuator (6:6') comprises a body and a piston linearly movable relative to the body, and the body and the piston are attached to the mounting bracket (12, 12') and the tool carrier (2) respectively, such that the linear actuator (6, 6') can raise and lower the tool carrier (2) with respect to the mounting bracket (12, 12').

## Description

### Technical field

The present invention relates to a tool carrier unit for a vehicle performing an agriculture task, such as sowing, weeding, manuring, cultivation, soil analyses, and harvesting wherein the tool carrier unit comprises a tool carrier for carrying at least one tool for performing the agriculture task.

The present invention also relates to an autonomous vehicle for performing an agriculture task. The invention relates to the technical field of agricultural machinery applications.

### Background

Autonomous vehicles performing agriculture tasks are well known in the art. For example, autonomous weeding vehicles, also named robot weeders, are used to automatically remove weeds. Such weeding vehicles may comprise a movable platform, a drive mechanism for driving the platform, sensors for detecting the weed plants, and a weeding mechanism connected to the platform and comprising a weeding tool adapted to carry out a weeding action on the detected weed plants. Such a weeding robot is, for example, known from EP3811748 and CN101707992. EP3811748discloses a weeding mechanism including an actuator adapted to upon activation move a cutting tool in a forth and back motion relative to the platform. CN101707992 discloses a weeding vehicle comprising a cutting tool in the form of rotating cylindrical saw discs.

A challenge with performing agriculture tasks using autonomous vehicles is that the distance between the soil and the tool performing an agriculture task often is critical for the result of the task. Thus, it is a desire to be able to adjust the heigh between the tool and the soil.

WO2020036942 discloses an autonomous machine configured to autonomously navigate through an agricultural field for performing an agriculture task. The autonomous machine includes a tool housing configured to house a tool carrier having one or more tool modules mounted to the tool carrier. The autonomous machine may include tool carrier actuators coupling the tool carrier to the tool housing so that the heigh between the tool and the soil can be adjusted. The tool carrier actuators are coupled to each end of the toolbar, such that the autonomous machine can raise or lower the tool carrier with respect to the tool housing.

### Summary

It is an aim of the present invention to provide an improved tool carrier for an autonomous weeding vehicle.

This aim is achieved by a tool carrier unit as defined in claim 1.

The tool carrier unit comprises a tool carrier for carrying at least one tool for an agricultural purpose, and a height adjustment assembly comprising at least one linear actuator coupled to the tool carrier such that the tool carrier can be raised and lowered. The height adjustment assembly comprises at least one linear bearing comprising a guide rail and at least one slide element arranged movably engaged to each other so that the guide rail and the at least one slide element are allowed to move relative to each other in a linear movement along the length of the guide rail. The tool carrier unit comprises at least one mounting bracket comprising coupling means for mechanically coupling the tool carrier unit to the vehicle, the at least one linear bearing is arranged between the mounting bracket and the tool carrier such that tool carrier and mounting bracket are movable relative each other, wherein the at least one linear actuator comprises a body and a piston linearly movable relative to the body, and the body and the piston are attached to the mounting bracket and the tool carrier respectively, such that the linear actuator can raise and lower the tool carrier with respect to the mounting bracket.

All movable parts are contained in the tool carrier unit. Thus, there is no movable part between the tool carrier unit and vehicle. The mounting bracket can be fixedly attached to a platform of the vehicle and the tool carrier is moved relative the mounting bracket.

An advantage with the tool carrier unit according to the invention is that the tool carrier unit is easy and fast to mount and dismount on a platform of an autonomous vehicle. Thus, it is easy and fast to replace the tool carrier with another tool carrier, for example, for maintenance purpose, when the tool needs to be repaired, or if the vehicle is to be provided with another type of tool. The tool carrier can also easily be moved to another vehicle. Another advantage with the tool carrier unit according to the invention is that the tool carrier unit is robust.

A further advantage with the tool carrier unit according to the invention is that the hight between the tool and the soil can be adjusted with high accuracy. This is achieved with the combination of a linear actuator and a linear bearing. The linear actuator provides high accuracy in on direction, such as a z- direction, and the linear bearing provides high accuracy in the other directions, such as the x- and y- directions.

A tool for an agricultural purpose, can be any type of tool used in farming or in agricultural work performing an agriculture task, for example, sowing, weeding, manuring, cultivation, harvesting, and performing soil analyses.

A linear bearing is a bearing designed to provide motion in one direction. The at least one linear bearing is arranged between the mounting bracket and the tool carrier such that tool carrier and the mounting bracket are movable relative each other. Thus, the tool carrier can be moved relative the mounting bracket, and accordingly relative the platform of the vehicle.

The body and the piston of the linear actuator are attached to the mounting bracket and the tool carrier respectively, such that the linear actuator can raise and lower the tool carrier with respect to the mounting bracket. This means that either the body is attached to the mounting bracket and the piston is attached to the tool carrier, or the body is attached to the tool carrier and the piston is attached to the mounting bracket. The parts of the linear actuator can be directly or indirectly attached to the mounting bracket and the tool carrier.

According to an embodiment of the invention, the height adjustment assembly comprises two linear bearing arranged in parallel and at a distance from each other between the mounting bracket and the tool carrier. Having two linear bearings arranged in parallel improves the stability of the tool carrier unit and the makes the carrier unit more robust. This also ensures that the sticky drawer effect is avoided, and thus the movement along the linear bearing is linear and does not wobble.

According to an embodiment of the invention, the mounting bracket comprises a socket for attaching the linear actuator to the mounting bracket and the socket is arranged between the two linear bearings. This facilitates the mounting of the linear actuator.

According to an embodiment of the invention, the guide rail of the at least one linear bearing is attached to the tool carrier, and the at least one slide element of the at least one linear bearing is attached to the mounting bracket. It is a desire to have as few movable parts as possible. In this embodiment, the at least one slide element is mounted on the mounting bracket, which is stationary relative the vehicle. This reduces the number of parts moving.

According to an embodiment of the invention, the body of the at least one linear actuator is attached to the mounting bracket, and the piston of the at least one linear actuator is attached to the tool carrier. This is advantageous since the position of the body is then kept still relative the vehicle. Thus, cabling, which are routed to the body, is not moved, and accordingly wear on the cables due to movement of the cables is avoided.

According to an embodiment of the invention, the tool carrier unit comprises two of the mounting bracket, and the height adjustment assembly comprises at least two of the linear bearing and two of the linear actuators, and each of the linear bearings is arranged between one of the mounting brackets and the tool carrier such that tool carrier is linearly movable relative to the mounting brackets, and the linear actuators are arranged such that they can raise and lower the tool carrier with respect to the mounting brackets. Preferably, the mounting brackets are arranged at opposite ends of the tool carrier. This makes the tool carrier unit robust.

According to an embodiment of the invention, the tool carrier is elongated and is adapted for supporting more than one tool module. Preferably, the tool carrier is adapted for supporting at least three tool modules.

According to an embodiment of the invention, the coupling means comprises at least one through hole for receiving bars of the vehicle. This makes it easy to mount the tool carrier unit on the vehicle.

According to an embodiment of the invention, the coupling means comprises at least one connection part protruding on an opposite side of the mounting bracket with respect to the linear bearing, and the at least one connection part is provided with the at least one through hole.

According to an embodiment of the invention, the through hole of the coupling means is arranged with its central axis perpendicular to the guide rail of the linear bearing. During use of the vehicle, the guid rail is substantially vertical and the central axis of the through hole is horizontal. Thus, it is possible to adjust the position of the tool carrier unit relative the vehicle in a horizontal direction by moving the carrier unit along the bars of the vehicle.

According to an embodiment of the invention, the coupling means comprises at least two of said connection parts protruding on an opposite side of the mounting bracket with respect to the linear bearing, and each of the two connection parts is provided with a through hole. This makes the connection between the vehicle and the tool carrier unit more robust.

Another aim of the invention is to provide an improved autonomous vehicle for performing an agriculture task.

This aim is achieved by an autonomous vehicle as defined in claim 12.

The autonomous vehicle comprises a movable platform and the tool carrier unit according to the invention, wherein the mounting bracket is attached to the platform.

With an autonomous vehicle is meant a vehicle capable of sensing its environment, to navigate and drive itself without a human passenger in the vehicle.

The autonomous vehicle according to the invention has the same advantages as described above for the tool carrier unit.

According to an embodiment of the invention, the movable platform comprises at least one bar extending though the one or more through holes in the coupling means.

### Brief description of the drawings

The invention will now be explained more closely by the description of different embodiments of the invention and with reference to the appended figures.
Fig. 1 shows in a perspective view an example of a tool carrier unit including a tool carrier according to the invention.
Figs 2a-b shows the end parts of the tool carrier unit in enlarged views.
Fig. 3 shows an example of a mounting bracket in a perspective view.
Fig. 4 shows an example of the mounting bracket with linear bearings and a linear actuator attached thereto in a perspective view.
Fig. 5a shows the tool carrier unit in a side view in a raised position.
Fig. 5b shows the tool carrier unit in a side view in a lowered position.
Fig. 6a shows the tool carrier unit in a front view in the raised position.
Fig. 6b shows the tool carrier unit in a front view in the lowered position.
Fig. 7 shows in a perspective view an example of the tool carrier unit provided with a plurality of tool modules.
Fig. 8 shows in a perspective view an example of an autonomous vehicle for performing an agriculture task including the tool carrier unit.
Fig. 9 shows in an enlarged view how the tool carrier unit is connected to the autonomous vehicle in a top view.

### Detailed description

Aspects of the present disclosure will be described more fully hereinafter with reference to the accompanying drawings. The weeding mechanism can, however, be realized in many different forms and should not be construed as being limited to the aspects set forth herein. Like numbers in the drawings refer to like elements throughout.

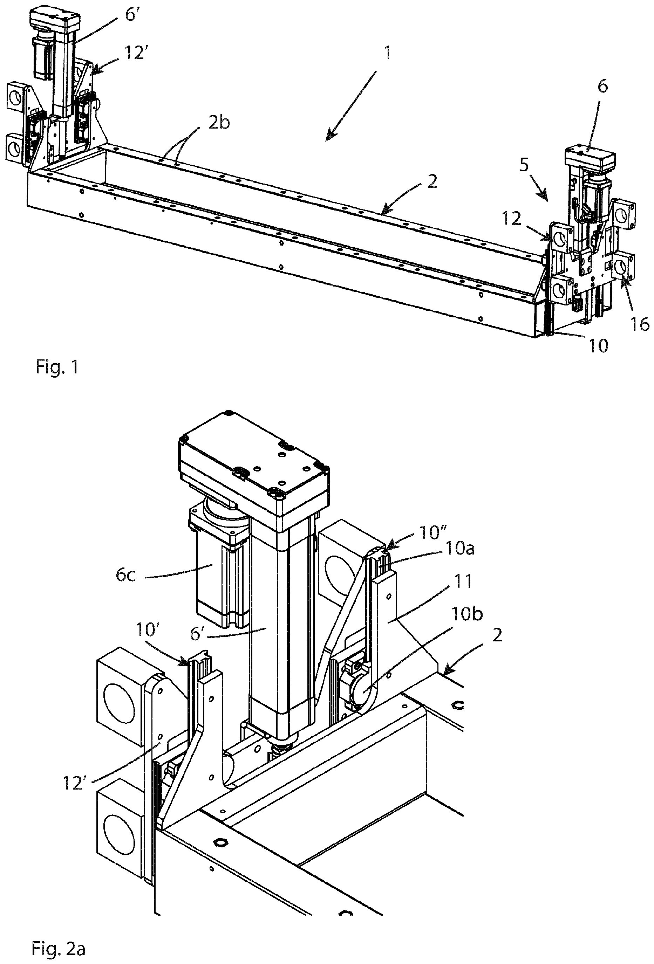

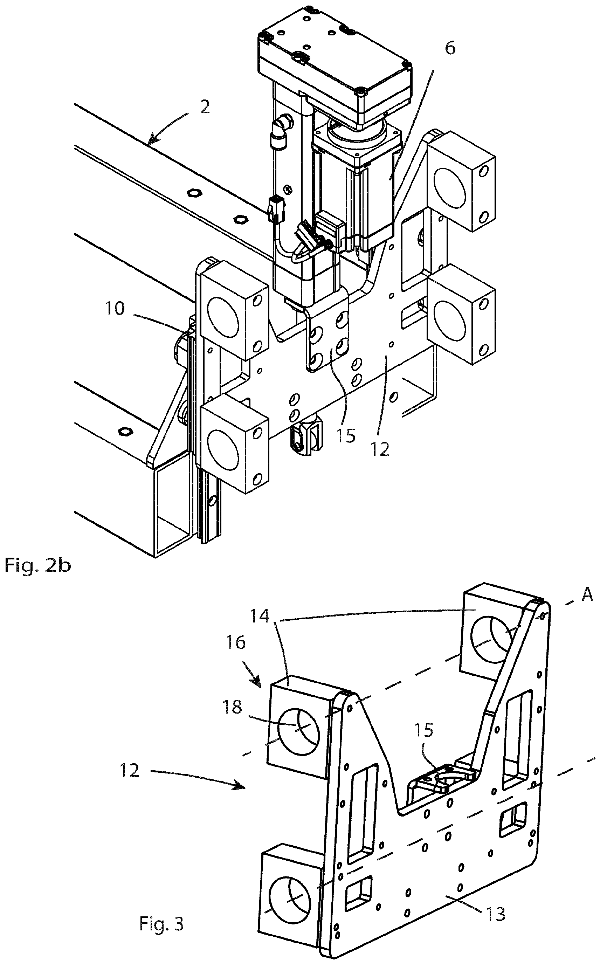

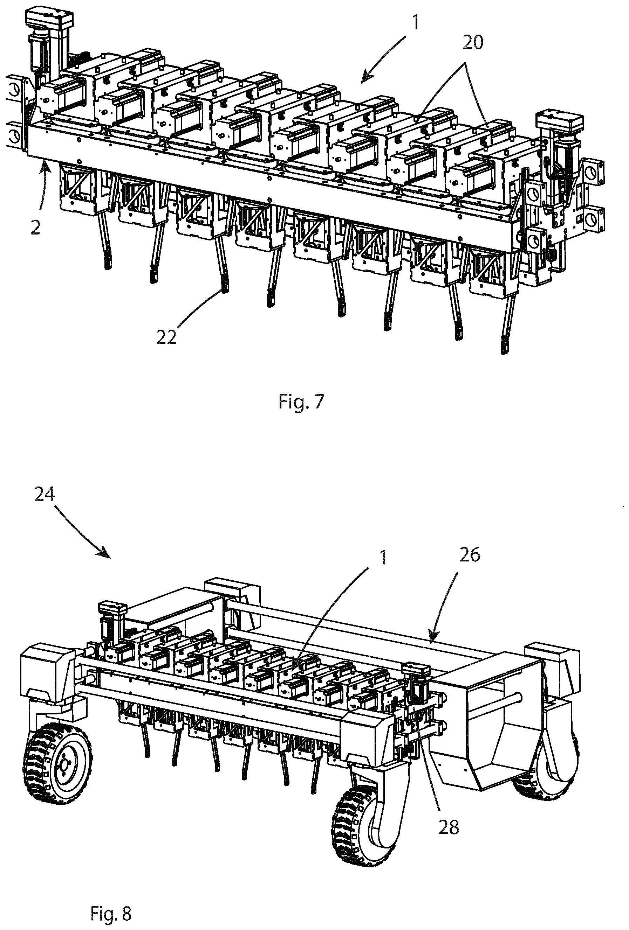

Figure 1 shows in a perspective view an example of a tool carrier unit 1 including a tool carrier 2 according to the invention. Figures 2a-b show the end parts of the tool carrier unit 1 in enlarged views. The tool carrier 2 is adapted for supporting one or more tool modules, as shown in figure 7. Each tool module may comprise a tool for an agricultural purpose. Preferably, the tool carrier 2 is elongated and has two opposite ends. In this example, the tool carrier 2 comprises two elongated beams arranged in parallel and two end beams, which together form an elongated box having four sides. Suitably, the tool carrier 2 is provided with attachment means for attaching the one or more tool modules to the tool carrier. In the disclosed example, the two elongated beams are provided with a plurality of threaded holes 2b for receiving fastening means for fastening the tool modules to the tool carrier 2. In other embodiments, other types of known attachment means can be used.

The tool carrier unit 1 further comprises a height adjustment assembly 5 comprising at least one linear actuator 6, 6' coupled to the tool carrier 2 such that the tool carrier 2 can be raised and lowered. In the disclosed example, the tool carrier unit 1 comprises two linear actuators 6, 6' coupled to opposite ends of the tool carrier 2.

The height adjustment assembly 5 further comprises at least one linear bearing 10. The linear bearings 10 is disposed between a mounting bracket 12 and the tool carrier 2 at each end of the the tool carrier 2. The tool carrier 2 may comprise one linear bearing 10, 10' coupled to each end of the tool carrier 2. The linear bearing 10 comprises a guide rail 10a and at least one slide element 10b as shown in figure 2a. The guide rail 10a is movably engaged to the slide element 10b so that the guide rail and the at least one slide element 10b are allowed to move relative to each other in a linear movement along the length of the guide rail 10a. The slide element 10b is designed for sliding relative to the guide rail 10a and is preferably made of a low friction material. In the disclosed example, the linear bearing 10 comprises two slide elements 10b, and the guide rail 10a is movably engaged to both slide elements 10b so that the guide rail is movable with respect to both the slide elements in a linear movement along the length of the guide rail 10a. In an alternative embodiment, the the linear bearing may have only one slide element 10b, or more than two slide elements.

In the disclosed example, the tool carrier 2 comprise two linear bearings 10', 10" coupled to each end of the tool carrier 2, as shown in figure 2a. The two linear bearings 10', 10" are arranged in parallel and at a distance from each other. The two linear bearings 10', 10" are disposed between the mounting bracket 12 and the tool carrier 2. Having two linear bearings 10, 10' arranged in parallel improves the stability of the tool carrier unit 1. In another embodiment, the tool carrier may have only one linear bearing 10 arranged at each end of the tool carrier 2. In the illustrated example, the ends of the tool carrier 2 are provided with attachment portions 11 for attaching the linear bearings 10 to the tool carrier 2, as shown in figure 2a.

The tool carrier unit 1 comprises at least one mounting bracket 12, 12' comprising coupling means 16 for mechanically coupling the tool carrier unit 1 to a vehicle. In the disclosed example, the tool carrier unit 1 comprises two mounting brackets 12, 12' arranged at each end of the tool carrier 2, respectively. The linear bearings 10 are arranged between the mounting brackets 12, 12' and the tool carrier 2 such that tool carrier 2 and the mounting bracket 12, 12' are movable relative each other. The at least one linear actuator 6, 6' is arranged between the mounting bracket 12, 12' and the tool carrier 2 such that the linear actuator 6, 6' can raise and lower the tool carrier 2 with respect to the mounting bracket 12, 12'. The linear actuator 6, 6' is arranged to actuate the linear movement of the guide rail 10a with respect to the slide element 10b, or the linear movement of the slide element 10b with respect to guide rail 10a.

In one example, the tool carrier unit 1 comprises two height adjustment assemblies 5 arranged between the two mounting bracket 12, 12' and the tool carrier 2 such that tool carrier 2 is linearly movable relative to the mounting brackets 12, 12'. Each height adjustment assembly 5 comprises at least one linear bearing 10, 10' and one linear actuator 6, 6'. The linear actuators 6, 6' are arranged such that they can raise and lower the tool carrier 2 with respect to the mounting brackets 12, 12' by moving the slide elements 10b up and down along the guide rails 10a, or alternatively by moving the guide rails 10a with respect to the slide elements 10b.

Figure 3 shows an example of a mounting bracket 12 in a perspective view. In this example, the mounting bracket 12 comprises a plate shaped part 13. One side of the plate shaped part 13 is designed for attaching the linear bearing 10 thereto. The other side of the plate shaped part 13 is provided with the coupling means 16 for coupling the tool carrier unit 1 to the vehicle. The coupling means 16 may comprise one or more connection parts 14 protruding from the plate shaped part 13 on an opposite side of the plate shaped part 13 with respect to the linear bearing 10. The coupling means 16 may comprise through holes 18 for receiving bars of the vehicle. Preferably, the connection part 14 is openable and closable so that the through hole 18 can easily receive the bars of the vehicle. For example, the connection part 14 is divisible and can be screwed together with one or more screws.

In this example, the coupling means 16 has four connection parts 14 and each connection part 14 is provided with a through hole 18. In the illustrated example, the coupling means 16 is provided with two pairs of through holes 18 arranged so that each pair of through holes can receive one bar. The through holes 18 in the same pair are arranged with their central axes A aligned to allow the bar to penetrate trough the pair of through holes 18. The pairs of through holes 18 are arranged at a distance from each other so that they can receive two bars arranged in parallel. This provides a robust and stable connection between the tool carrier unit 1 and the vehicle. Suitably, the through holes 18 of the coupling means 16 are arranged so that the central axes A of the through holes are horizontal during use of the vehicle. Thus, it is possible to adjust the position of the tool carrier unit 1 relative the vehicle in a horizontal direction by moving the carrier unit 2 along the bars of the vehicle. This is, for example, achieved by arranging the connection parts 14 so that the through holes 18 have their central axes A perpendicular to the guide rail 10a of the linear bearing 10.

The coupling means 16 can be arranged in many ways. Preferably, the coupling means is arranged so that the tool carrier unit 1 can be removably attached to the vehicle and such that the tool carrier unit 1 can be easy to mount and dismount from the vehicle. For example, the coupling means may comprise clamping units for clamping around the bars, or snap mounts. The mounting bracket 12 may comprise a socket 15 for attaching the linear actuator 6 to the mounting bracket 12.

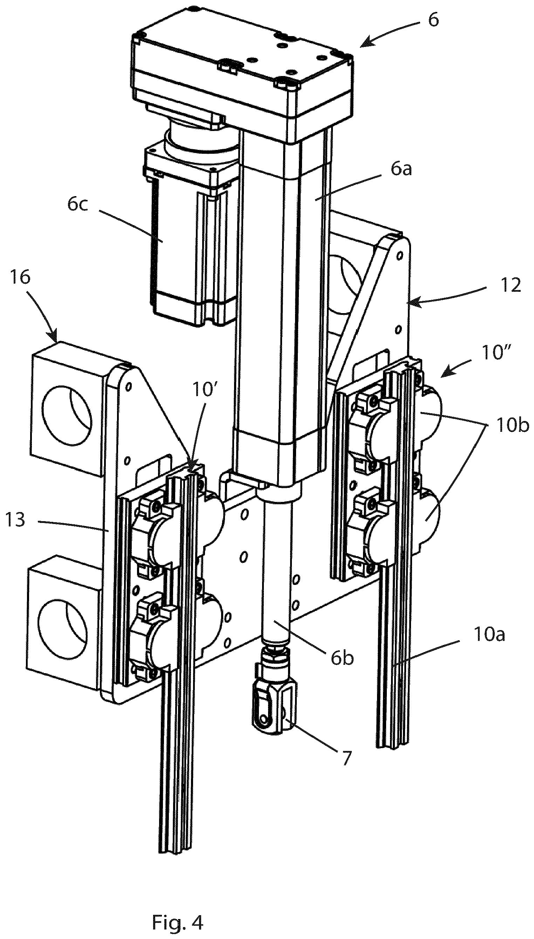

Figure 4 shows the mounting bracket 12 of figure 3 with a linear actuator 6 and linear bearings 10 attached thereto. The linear actuator 6 comprises a body 6a and a piston 6b linearly movable relative to the body 6a. The body 6a is, for example, hollow with an opening for the piston 6b. In this example, the body 6a is attached to the mounting bracket 12. The lower end of the piston 6b comprises a fastening member 7 for attaching the piston 12b to the tool carrier 2. For example, the piston 12b is attached to one of the end beams of the tool carrier unit 2.

The linear actuator 6 further comprises a motor 6c for actuating the movement of the piston 6b relative to the body 6a. The motor 6c is, for example, attached to the body 6a. The body 6a is attached to the socket 15 of the mounting bracket 12 and the lower end of the piston 6b is attached to the tool carrier 2, as shown in figure 1. In this example, the fastening members 7 of the pistons 6, 6' are attached to one end respectively of the tool carrier 2. This is advantageous since the position of the body is then kept still relative the vehicle. Thus, cabling, which are routed to the body, is not moved, and accordingly wear on the cables due to movement of the cables is avoided. In an alternative embodiment, the piston 6b can be attached to the mounting bracket 12, and the body 6a is attached to the tool carrier 2.

In one embodiment, the carrier unit 2 comprises two linear bearings 10', 10" attached to the mounting bracket 12. The linear bearings 10', 10" are arranged spaced apart and in parallel. In the disclosed example, the socket 15 is arranged between the two linear bearings 10', 10". Each of the linear bearings 10', 10" comprises at least one slide element 10b and one guide rail 10a. In this example, each of the linear bearings 10', 10" comprises two slide elements 10b, and the guide rail 10a is movably engaged to the slide elements 10b. This achieves a stable movement of to the guide rail relative to the slide elements 10b. When the tool carrier unit 1 is mounted on the vehicle, the guide rails 10a are vertically arranged so that the tools can be raised and lowered with respect to the soil.

In this embodiment, the slide elements 10b of the linear bearings 10 are attached to the plate shaped part 13 of the mounting bracket 12 and the guide rails 10a are attached to the attachment portions 11 of the tool carrier 2, as shown in figure 2a-b. Thus, the slide elements 10b are stationary with respect to the vehicle when the mounting bracket 12 has been attached to the vehicle, and the guide rails 10a are movable with respect to the mounting bracket 12 and accordingly with respect to the vehicle. This reduces the number of parts movable relative to each other. It is a desire to have as few parts as possible movable relative to each other.

The tool carrier is moveable between a raised position and a lowered position. The user can choose to lock the tool carrier 2 in any position between the raised and lowered positions. For example, the linear actuator 6, 6' can be provided with a locking mechanism, such as a brake. Preferably, the brake must be unlocked to perform a movement of the linear actuator. The locking of the linear actuator can, for example, be controlled by software.

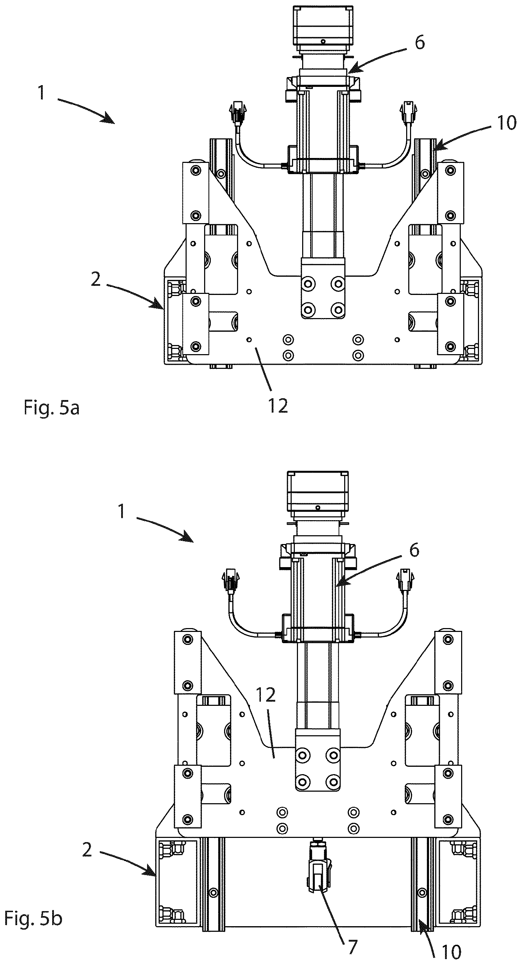

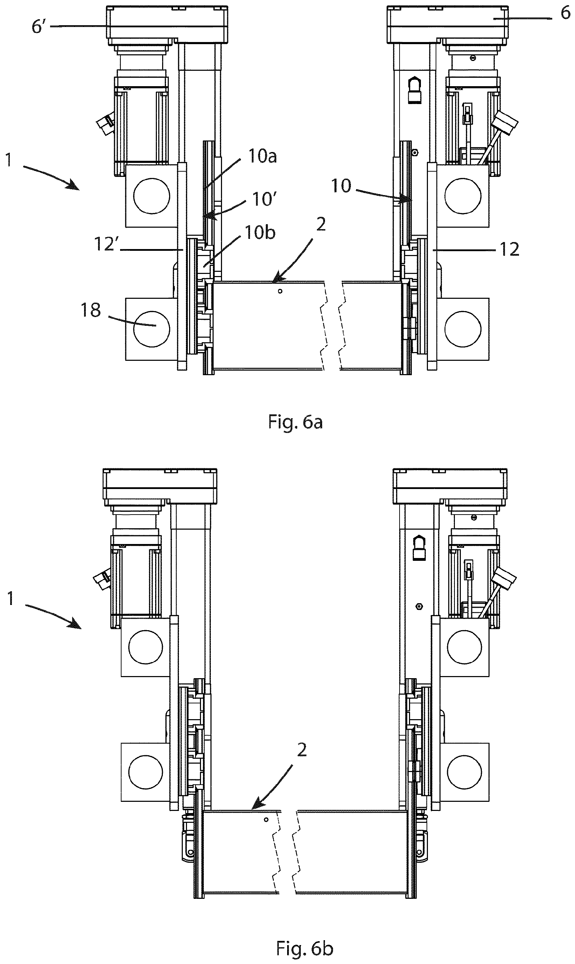

Figure 5a shows the tool carrier unit 1 in a side view in a raised position, and figure 5b shows the tool carrier unit 1 in a side view in a lowered position. Figure 6a shows the tool carrier unit 1 in a front view in the raised position, and figure 6b shows the tool carrier unit 1 in a front view in the lowered position.

Figure 7 shows in a perspective view an example of the tool carrier unit 1 provided with a plurality of tool modules 20 attached to the tool carrier 2. Each tool module 20 comprises a tool 22. By adjusting the height of the tool carrier, the distance between the tool 22 and the soil can be adjusted to a desired distance. In this example, the tool 22 is a cutting tool for performing weeding. However, the tool can be any type of tool suitable for carrying out an agricultural task.

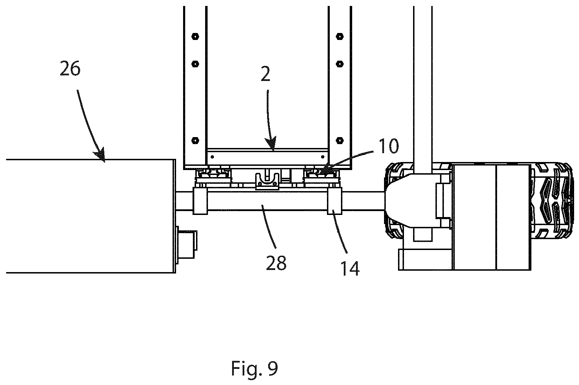

Figure 8 shows an example of an autonomous vehicle 24 for performing an agriculture task including the tool carrier unit 1. Figure 9 shows in an enlarged view how the tool carrier unit 1 is connected to the autonomous vehicle 24. The autonomous vehicle 24 comprises a movable platform 26 and a drive mechanism for driving the platform 26. In this example, the platform 26 is provided with a plurality of wheels. The drive mechanism for driving the platform may comprise a plurality of motors. For example, each of the wheels 14 is provided with one motor for actuating the wheel. The drive mechanism further comprises a control unit for controlling the motions of the platform.

The mounting bracket 12, 12' is attached to the platform 26. In the illustrated example, the platform 26 comprises one or more bars 28 extending though the one or more through holes 18 of the coupling means 16 of the mounting brackets 12, 12'. In this example, the movable platform 26 comprises two bars 28 arranged on each of two opposite sides of the platform. The connection parts 14 are opened and threaded over the bar so that the bar is positioned in the through holes 18. The connection parts 14 are closed and by that the connection parts 14 encloses the bar 28. The connection parts 14 are locked. When the connection parts 14 have been closed and locked, the bar 28 penetrates through the through holes 18 of the connection parts 14, as shown in figure 9.

The present invention is not limited to the embodiments disclosed but may be varied and modified within the scope of the following claims. For example, the number of linear bearings may vary. The coupling means for connecting the tool carrier unit to the platform can be achieved in many ways.

### Reference list

- 1: tool carrier unit
- 2: tool carrier
- 2b: threaded holes
- 5: height adjustment assembly
- 6, 6': linear actuator
- 6a: body
- 6b: piston
- 6c: motor
- 7: fastening member
- 10, 10',10": linear bearing
- 10a: guide rail
- 10b: slide element
- 11: attachment portions
- 12,: 12' mounting bracket
- 13: plate shaped part
- 14: connection part
- 15: socket
- 16: coupling means
- 18: through hole
- 20: tool module
- 22: tool
- 24: autonomous vehicle for performing an agriculture task
- 26: movable platform
- 28: bars

## Claims

1. A tool carrier unit (1) for vehicles performing agriculture tasks, wherein the tool carrier unit (1) comprises a tool carrier (2) for carrying at least one tool (22) for an agricultural purpose, and a height adjustment assembly (5) comprising at least one linear actuator (6, 6') coupled to the tool carrier (2) such that the tool carrier (2) can be raised and lowered, **characterized in that** the height adjustment assembly (5) comprises at least one linear bearing (10,10',10") comprising a guide rail (10a) and at least one slide element (10b) movably engaged to each other so that the guide rail and the at least one slide element 10b are allowed to move relative to each other in a linear movement along the length of the guide rail 10a, the tool carrier unit (1) comprises at least one mounting bracket (12, 12') comprising coupling means (16) for mechanically coupling the tool carrier unit to the vehicle, the at least one linear bearing (10,10',10") is arranged between the mounting bracket (12, 12') and the tool carrier (2) such that the tool carrier and the mounting bracket are movable relative each other, wherein the at least one linear actuator (6:6') comprises a body (6a) and a piston (6b) linearly movable relative to the body, and the body and the piston are attached to the mounting bracket (12, 12') and the tool carrier (2) respectively, such that the linear actuator (6, 6') can raise and lower the tool carrier (2) with respect to the mounting bracket (12, 12').

2. The tool carrier unit according to claim 1, wherein the guide rail (10a) of the at least one linear bearing (10,10',10") is attached to the tool carrier (2) and the slide element (10b) of the at least one linear bearing is attached to the mounting bracket (12,12').

3. The tool carrier unit according to claim 1 or 2, wherein the body (6a) of the at least one linear actuator (6,6') is attached to the mounting bracket (12,12'), and the piston (12b) of the at least one linear actuator is attached to the tool carrier (2).

4. The tool carrier unit according to any of the previous claims, wherein the height adjustment assembly (5) comprises a pair of said linear bearing (10,10') arranged in parallel and at a distance from each other between said mounting bracket (12,12') and the tool carrier (2).

5. The tool carrier unit according to claim 4, wherein the mounting bracket (12,12') comprises a socket (15) for attaching the linear actuator (6,6') to the mounting bracket (12,12') and the socket (15) is arranged between said two linear bearings (10,10',10").

6. The tool carrier unit according to any of the previous claims, wherein the tool carrier unit (1) comprises two of said mounting bracket (12,12'), and the height adjustment assembly (5) comprises two of said linear bearing (10,10',10"), and two of said linear actuator (6,6'), and the linear bearings are arranged between the mounting brackets and the tool carrier such that tool carrier (2) is linearly movable relative to the mounting brackets (12, 12'), and said linear actuators (6,6') are arranged such that they can raise and lower the tool carrier (2) with respect to the mounting brackets (12, 12').

7. The tool carrier unit according to claim 6, wherein the tool carrier (2) is elongated, and the mounting brackets (12, 12') are arranged at opposite ends of the tool carrier.

8. The tool carrier unit according to any of the previous claims, wherein said coupling means (16) comprises at least one through hole (18) for receiving a bar (28) of the vehicle.

9. The tool carrier unit according to claim 8, wherein said coupling means (16) comprises at least one connection part (14) protruding on an opposite side of the mounting bracket (12, 12') with respect to the linear bearing (10,10',10"), and the at least one connection part (14) is provided with said at least one through hole (18).

10. The tool carrier unit according to claim 8 or 9, wherein the through hole (18) of the coupling means (16) is arranged with its central axis (A) perpendicular to the guide rail (10a) of the linear bearing.

11. The tool carrier unit according to claim 9, wherein said coupling means (16) comprises at least two of said connection parts (14) protruding on an opposite side of the mounting bracket (12, 12') with respect to the linear bearing (10,10',10"), each of the two connection parts (14) is provided with a through hole (18), and the through holes are arranged so that their central axes (A) are aligned.

12. An autonomous vehicle (24) for performing an agriculture task, comprising a movable platform (26), **characterized in that** autonomous vehicle comprises the tool carrier unit (1) according to any of the previous claims, wherein said mounting bracket (12,12') is attached to the movable platform (26).

13. The autonomous vehicle (24) according to claim 8 and 12, wherein the movable platform (26) comprises at least one bar (28) extending though said at least one through hole (18).
